# EUROPÄISCHE PATENTSCHRIFT

(11) **EP 2 522 449 B1**
(45) Veröffentlichungstag und Bekanntmachung des Hinweises auf die Patenterteilung: **27.03.2013**
(21) Anmeldenummer: 11003943.5
(22) Anmeldetag: 12.05.2011
(51) Int. Cl.: B23D 45/02, B23D 45/12, B23D 45/20

(54) **Fliegende Säge**
Flying saw
Scie mobile

(43) Veröffentlichungstag der Anmeldung: 14.11.2012
(73) Patentinhaber: Reika GmbH & Co. KG, 58093 Hagen (DE)
(72) Erfinder: Braun, Hans-Jörg, 58093 Hagen (DE)
(74) Vertreter: Dörner, Kötter & Kollegen

(56) Entgegenhaltungen:
- EP-A1- 2 163 335
- EP-B1- 0 490 328
- DE-A1- 2 800 528
- DE-A1- 2 948 103
- DE-A1- 4 101 749
- JP-A- 61 111 806

## Beschreibung

Die Erfindung betrifft eine fliegende Säge gemäß dem Oberbegriff von Anspruch 1, mit wenigstens einer Führungsschiene, auf dem eine Sägevorrichtung über wenigstens einen Fahrantrieb entlang auf vorgegebene Längen abzulängenden Profil- oder Rohrmaterial verfahrbar gelagert ist, insbesondere während des Ablängens synchron zur Vorschubbewegung des Profil- oder Rohrmaterials. Eine derarige fliegende Säge geht beispielsweise aus der DE 2 800 528 A1 hervor.

Zum Ablängen von Profilen oder von längsnahtgeschweißten Rohrsträngen, die theoretisch endlos sind, kommen so genannte fliegende Sägen zum Einsatz, welche mit dem Vorschub des Profil- bzw. Rohrstrangs synchronisiert sind und den Trennvorgang dem Vorschub des Profil- bzw. Rohrstranges folgend vornehmen. Derartige fliegende Sägen, wie sie beispielsweise aus der DE 31 12 519 A1 bekannt sind, umfassen eine Sägevorrichtung, die innerhalb eines Maschinenbetts bewegbar angeordnet ist. Hierzu sind in dem Maschinenbett Führungs- und Antriebselemente angeordnet. Zur Bewegung der Sägevorrichtung entlang des Maschinenbetts ist dabei regelmäßig in dem Maschinenbett ein Zahnstangenantrieb angeordnet.

Derartige fliegenden Sägen kommen beispielsweise in Rohranlagen zum Einsatz, in denen kontinuierlich zu Rohren geformte Bleche geschweißt werden, welche nachfolgend über die fliegende Säge auf vorgegebene Längen gesägt werden. Da ein Stillstand derartiger Anlagen erhebliche monitäre Auswirkungen hat, sind Stillstandszeiten auf ein Minimum zu begrenzen. Nachteilig an den vorbekannten fliegenden Sägen ist, dass Reparaturen oder auch Werkzeugwechsel erhebliche Zeiten in Anspruch nehmen, wodurch hohe Kosten verursacht sind.

Hier will die Erfindung Abhilfe schaffen. Der Erfindung liegt die Aufgabe zu Grunde, eine fliegende Säge zu schaffen, bei der Wartungs- und Reparaturbedingte Stillstandszeiten minimiert sind. Gemäß der Erfindung wird diese Aufgabe durch die Merkmale des kennzeichnenden Teils des Patentanspruchs 1 gelöst.

Mit der Erfindung ist eine fliegende Säge geschaffen, bei der durch Wartungs- und/oder Reparaturarbeiten indizierte Stillstandszeiten minimiert sind. Durch die Anordnung der Sägevorrichtung innerhalb eines Rahmenelements derart, dass diese mit dem Rahmenelement lösbar verbunden, ist ein Wechsel der Sägevorrichtung innerhalb des Rahmenelements ermöglicht, Die eigentlichen Wartungs- und/oder Reparaturarbeiten können nach Austausch der Sägevorrichtung der fliegenden Säge vorgenommen werden; der Betrieb kann mit der ausgewechselten Sägevorrichtung unmittelbar fortgeführt werden,

In Weiterbildung der Erfindung ist wenigstens eine Führungsschiene wie auch der wenigstens eine Fahrantrieb oberhalb der Sägevorrichtung angeordnet, wobei insbesondere kein Maschinenbett vorhanden ist. Hierdurch ist eine aufwandminimierte Herstellung ermöglicht. Zudem ist eine Verschmutzung des üblicherweise in einem Maschinenbett angeordneten Antriebs durch Kühlflüssigkeit und Spähne vermieden. Eine aufwendige Erstellung eines Maschinenbetts entfällt.

In Ausgestaltung der Erfindung sind zwei Führungsschienen angeordnet, die wenigstens einen auf diesen verfahrbaren Querträger aufnehmen, wodurch ein Portal gebildet ist, an dem dass die Sägevorrichtung aufnehmende Rahmenelement befestigt ist. Hierdurch ist eine zuverlässige Aufhängung des die Sägevorrichtung aufnehmenden Rahmenelements erzielt.

In weiterer Ausgestaltung der Erfindung ist die Sägevorrichtung über wenigstens einen Antrieb innerhalb des Rahmenelements bewegbar. Hierdurch ist eine Ausrichtung der Sägevorrichtung relativ zum abzulängenen Profil- oder Rohrmaterial ermöglicht.

Gemäß der Erfindung ist die Sägevorrichtung über eine Verschiebeeinrichtung mit dem Rahmenelement verbunden, über welche die Sägevorrichtung innerhalb des Rahmenelements vertikal bewegbar ist. Dabei umfasst die Verschiebeeinrichtung bevorzugt eine Spindel, die mit einem Spindelantrieb verbunden ist.

Alternativ kann auch eine hydraulisch oder permatisch betriebene Teleskopstange angeordnet sein. Die Verschiebeeinrichtung ist derart ausgebildet, dass ein Ausbringen der Sägevorrichtung aus dem Rahmenelement über die Verschiebeeinrichtung ermöglicht ist.

In Ausgestaltung der Erfindung ist die Sägevorrichtung über eine Kupplung mit der Spindel lösbar verbunden. Dabei ist die Kupplung vorteilhaft elektrisch, pneumatisch oder hydraulisch ver- und entriegelbar ausgebildet. Hierdurch ist ein einfaches Lösen der Verbindung nach Ausbringen der Sägevorrichtung aus dem Rahmenelement sowie eine einfache Verbindung nach der Aufnahme einer Sägevorrichtung in das Rahmenelement ermöglicht.

In weiterer Ausgestaltung der Erfindung ist das Rahmenelement über einen Antrieb horizontal entlang des wenigstens einen Querträgers bewegbar. Hierdurch ist eine horizontale Ausrichtung der Sägevorrichtung ermöglicht.

In weiterer Ausgestaltung der Erfindung ist innerhalb des Rahmenelements wenigstens eine vertikale Führung vorhanden, über welche die Sägevorrichtung mit dem Rahmenelement verbunden ist. Hierdurch ist eine geführte vertikale Bewegung der Sägevorrichtung innerhalb des Rahmenelements ermöglicht.

In weiterer Ausgestaltung der Erfindung ist eine Hubvorrichtung vorgesehen, wobei an dem Rahmenelement eine Positioniereinrichtung angeordnet ist, die eine Ankopplung der Hubvorrichtung in definierter Position zur Entnahme der Sägevorrichtung aus dem Rahmenelement ermöglicht. Hierdurch ist eine Ausbringung der Sägevorrichtung aus dem Rahmenelement auf die Hubvorrichtung bzw. eine Übergabe einer auf der Hubvorrichtung bereit gestellten Sägevorrichtung zur Einbringung in das Rahmenelement ermöglicht.

In weiterer Ausgestaltung der Erfindung weist die Hubvorrichtung wenigstens eine vertikale Führung auf, die mit der vertikalen Führung des Rahmenelements korrespondiert und die in angekoppelter Positionierung der Hubvorrichtung eine Fortführung der vertikalen Führung des Rahmenelements bildet. Hierdurch ist die Einfädelung der Sägevorrichtung in die vertikale Führung des Rahmenelements erleichtert, wodurch ein zeitoptimierter Wechsel einer Sägevorrichtung mit der Hubvorrichtung bewirkt ist. Zur Be- bzw. Entstückung der fliegenden Säge ist die Hubvorrichtung vorteilhaft verfahrbar ausgebildet.

In weiterer Ausgestaltung der Erfindung ist die Sägevorrichtung durch eine Wirbeitrennvorrichtung gebildet. Hierdurch ist ein effektiver Trennvorgang zum Ablängen von Profil- oder Rohrmaterial ermöglicht. Zudem ist eine derartige Wirbeltrennvorrichtung in kompakter Bauweise realisierbar, wodurch fliegkräfte reduziert und Beschleunigungsvorgänge optimiert werden können.

In Weiterbildung der Erfindung ist wenigstens ein Spannmodul zur Aufnahme eines abzulängenden Profil- oder Rohrmaterials angeordnet, das mit dem Querträger verbunden und an die Sägevorrichtung anstellbar ist. Hierdurch ist ein modularer Aufbau erzielt, bei dem das Spannmodul unabhängig von der Sägevorrichtung bewegt oder ausgetauscht werden kann, wodurch beispielsweise die Zugänglichkeit zum Sägewerkzeug verbessert und dessen verschleißbedingter Wechsel erleichtert ist. Vorteilhaft ist in Strangrichtung beidseitig des Sägemoduls jeweils ein solches Spannmodul angeordnet. In den Spannmodulen kann das abzulängende Rohrmaterial so beidseitig des Sägewerkzeugs fixiert werden. Dabei ist eine sehr nahe Anstellung der Spannmodule an das Sägewerkzeug möglich, wodurch Vibrationen während des Sägevorgangs reduziert werden können.

Durch die separate, modulare Ausbildung des Spannmoduls ist eine kompaktere Bauweise der Sägevorrichtung bewirkt, wodurch nicht zuletzt ein Wechsel der Sägevorrichtung in der fliegenden Säge vereinfacht ist.

In weiterer Ausgestaltung der Erfindung ist das wenigstens eine Spannmodul mit wenigstens einem separatem Querträger verbunden, über den es auf der wenigstens einen Führungsschiene verfahrbar ist. Hierdurch ist die Anstellung an die Sägevorrichtung vereinfacht. Darüber hinaus ist eine einfache Entfernung des wenigstens einen Spannmoduls von der Sägevorrichtung ermöglicht, wodurch die Zugängigkeit zu dem Werkzeug der Sägevorrichtung für einen Werkzeugwechsel verbessert ist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

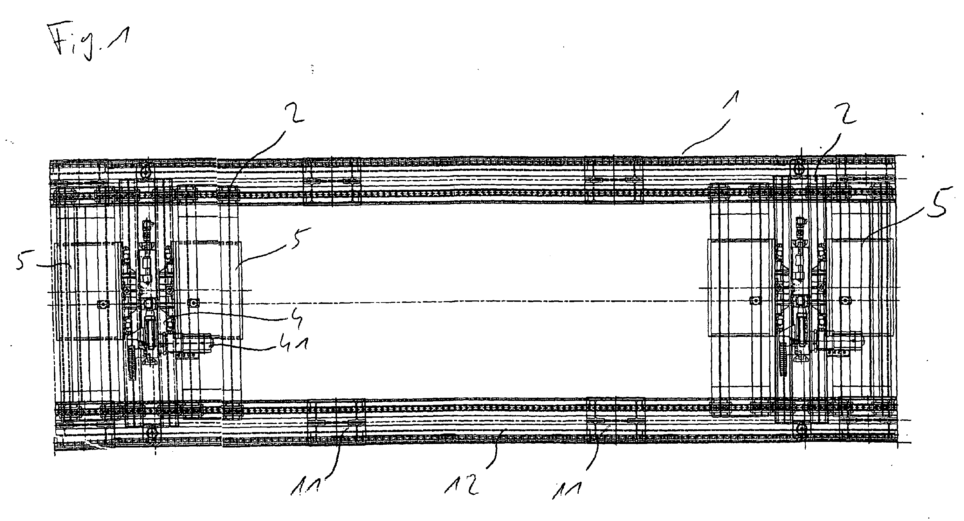

- Figur 1: die schematische Darstellung einer fliegenden Säge mit zwei Säge-vorrichtungen in der Draufsicht;

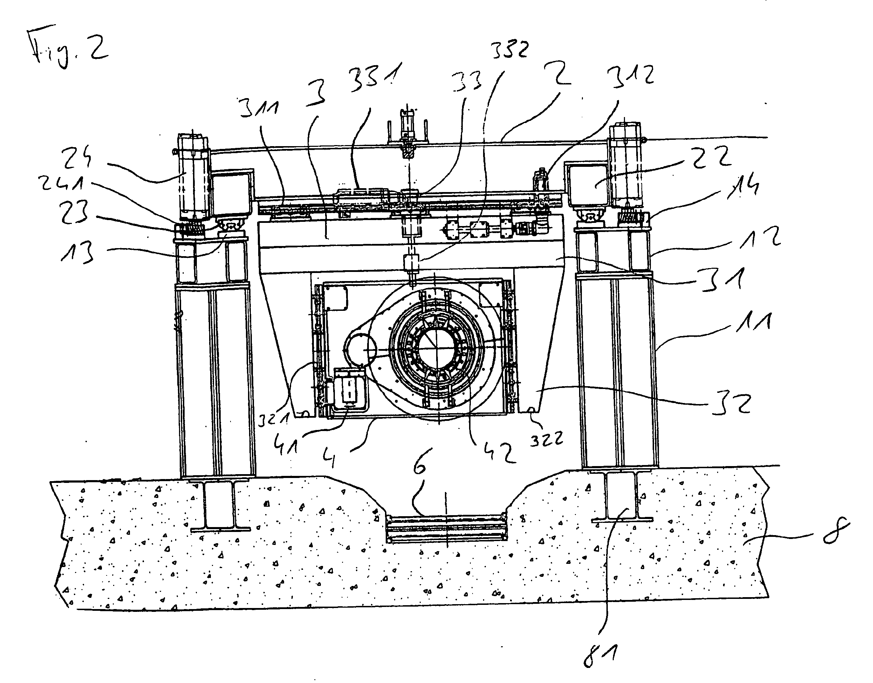

- Figur 2: die schematische Darstellung einer Sägevorrichtung der fliegenden Säge aus Figur 1;

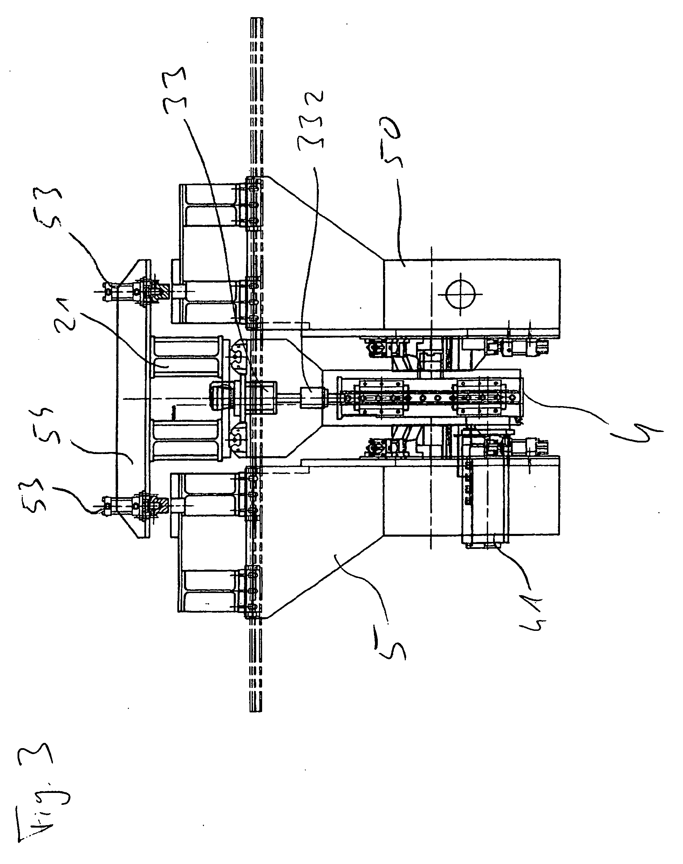

- Figur 3: die schematische Darstellung der Sägevorrichtung aus Figur 2 in der Seitenansicht und

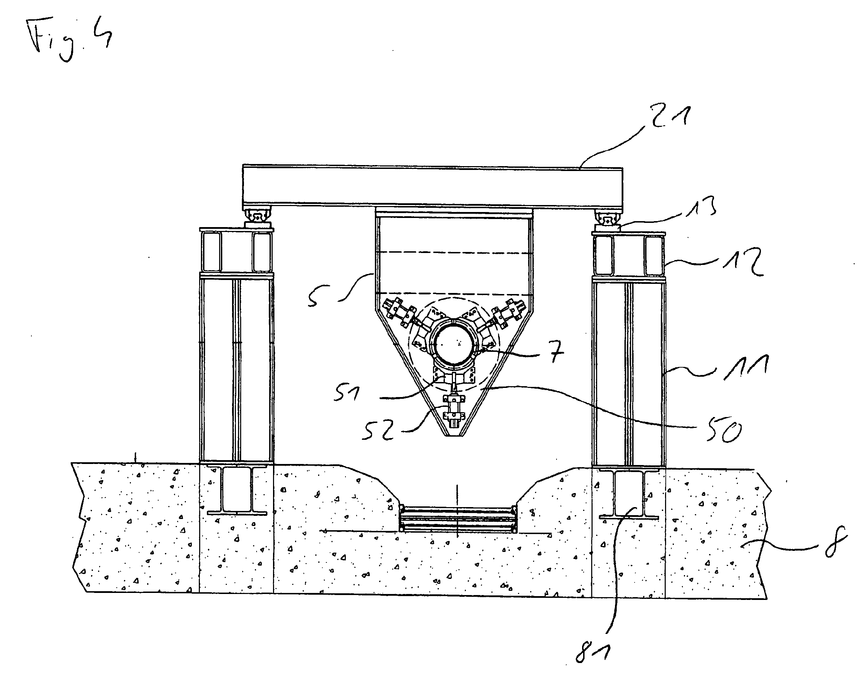

- Figur 4: die schematische Darstellung eines Einspannmoduls der Sägevor-richtung aus Figur 1.

Die als Ausführungsbeispiel gewählte fliegende Säge besteht im Wesentlichen aus einem Schienensystem 1, auf dem ein Querträger 2 verschiebbar angeordnet ist, der einen Wechseirahmen 3 zur Aufnahme einer Wirbeltrennvorrichtung 4 aufnimmt. Beidseitig der Wirbeltrennvorrichtung 4 ist ein Spannmodul 5 zur Einspannung von zu trennendem Profil- oder Rohrmaterial angeordnet. Unterhalb der Wirbeltrennvorrichtung 4 ist ein Spanförderer 6 zum Abtransport von Spänen und Kühlflüssigkeit angeordnet.

Das Schienensystem 1 ist gebildet aus parallel angeordneten Ständern 11, auf denen zwei zueinander parallel angeordnete Träger 12 befestigt sind. Die Ständer 11 sind im Ausführungsbeispiel mit einem in einem Fundament 8 eingegossenen Tragprofil 81 verschraubt. Entlang der Träger 12 ist auf diesen jeweils eine Schiene 13 zur verschieblichen Auflage der Querträger 2 angeordnet. Parallel zu den Schienen 13 ist jeweils außen eine Zahnstange 14 auf dem Träger 12 angeordnet.

Die Querträger 2 sind im Ausführungsbeispiel gebildet durch zwei quer zu den Trägern 12 angeordnete Träger 21, welche über zwei entlang der Träger 12 angeordnete Profile 22 miteinander verbunden sind, sodass ein rechteckförmiger Rahmen gebildet ist. Unterhalb der Profile 22 ist an diesen jeweils eine Führung 23 zum Eingriff mit den Schienen 13 des Schienensystems 1 angeordnet. An beiden Enden eines Trägers 21 ist jeweils ein Servoantrieb 24 angeordnet, dessen Antriebsachse mit einem Zahnrad 241 versehen ist, das in eine Zahnstange 14 des Schienensystems eingreift. Über die Servoantriebe 24 sind die Querträger 2 entlang der Schienen 13 des Schienensystems 1 bewegbar. Die Querträger 2 sind im Ausführungsbeispiel für die Wirbeltrennvorrichtungen wir für die Spannmodule 5 identisch ausgebildet.

An zwei Querträgern 2 ist über horizontale Führungsschienen 311 ein Wechselrahmen 3 befestigt. Der Wechselrahmen 3 ist gebildet aus einem Traggerüst 31, an dem gegenüberliegend zwei Seitenträger 32 angeordnet sind. Dabei ist das Traggerüst 31 mit einem horizontalen Lineartrieb 312 verbunden, über den eine horizontale Bewegung des INechselrahmens 3 relativ zu den Querträgern 2 ermöglicht ist. An den Seitenträgern 32 sind an ihren dem jeweils gegenüberliegend angeordneten Seitenträger 32 zugewandten Seiten jeweils vertikale Seitenführungen 321 zur verschiebbaren Aufnahme der Wirbeltrennvorrichtung 4 angeordnet, Weiterhin ist an dem Traggerüst 31 eine Spindel 33 angeordnet, die über einen Spindelantrieb 321 antreibbar und mit der Wirbeltrennvorrichtung 4 über eine Kupplung 332 verbunden ist. Die Kupplung 332 ist im Ausführungsbeispiel hydraulisch ver- und entriegelbar ausgebildet. Über die Spindel 33 ist die Wirbeltrennvorrichtung 4 entlang der vertikalen Seitenführungen 321 entlang der Seitenträger 32 verschiebbar.

Wirbeltrennvorrichtungen zum Trennen von rohr- und stangenförmigen Werkstücken im Wirbelverfahren sind beispielsweise aus der EP 490 328 B1 bekannt. Bei einem Wirbelverfahren handelt es sich um ein spanabhebendes Verfahren, bei dem das Werkzeug das Werkstück spiralwirbelartig umkreist. Die Einschnitttiefe wird durch ein oder mehrere, mit hoher Schnittgeschwindigkeit umlaufende Messer, in einem Arbeitsgang hergestellt. Dabei wälzt sich die durch das Schneidwerkzeug gebildete Innenmantelfläche auf der zylindrischen Außenmantelfläche des zu bearbeitenden Werkstücks ab. Dieser Bewegungsvorgang wird der sich ständig kreisenden Bewegung des Schneidwerkzeugs überlagert. Das Wirbelverfahren hat den Vorteil, dass eine Vielzahl von Schneidwerkzeugen, insbesondere Schneidstählen, nebeneinander angeordnet werden können, die über einen größeren Segmentbereich gleichzeitig in Eingriff mit dem Werkstück stehen. Beim Wirbeltrennen wird dabei ein Wirbelsägewerkzeug mit innen liegender Verzahnung eingesetzt. Die Schneidzähne des innenverzahnten Wirbelwerkzeugs können tangential in das Werkstück eindringen. Auf Grund des Wirbelvertahrens braucht der wirksame Eindringradius des Wirbelwerkzeuges nur die Wandstärke des Werkstücks zu umfassen. Handelt es sich hierbei um ein Vollmaterial, so muss das Wirbelwerkzeug nur bis zum Mittelpunkt des Vollmaterials eindringen, da die weitere Hälfte des Werkstücks durch die Umkreisung des Wirbelwerkzeuges abgetrennt wird. Die Wirbeltrennvorrichtung 4 weist einen integrierten Antrieb 41 auf. Im Ausführungsbeispiel ist der Antrieb als elektromagnetischer rotatorischer Direktantrieb ausgebildet.

An den freien Enden der Seitenträger 32 sind im Ausführungsbeispiel weiterhin Positionierbohrungen 332 angeordnet. Die Positionierbohrungen 332 dienen der exakten Positionierung einer - nicht dargestellten - verfahrbaren Hubvorrichtung, die mit Seitenführungen versehen ist, welche im angestellter Position mit den Seitenführungen 321 der Seitenträger korrespondieren, derart, dass die Wirbeltrennvorrichtung 4 über die Spindel 33 in die Seitenträger der Hubvorrichtung bewegt werden und anschließend von der Spindel entkoppelt werden kann. Über eine solche Hubvorrichtung ist ein einfacher Austausch der Wirbeltrennvorrichtung 4 ermöglicht. Zur Positionierung werden an der Hubvorrichtung angeordnete Positionshilfen in die Positionsbohrungen eingeführt, so dass eine positionsgenaue Verbindung zwischen Hubvorrichtung und den Seitenträgern erzielt ist. Zur Vereinfachung des Einfädelvorgangs können Positionierbohrungen und Positionierstifte auch konisch ausgebildet sein. Die Bewegung der Sägevorrichtung 4 in die Seitenführungen der Hubvorrichtung erfolgt über die Spindel 33. Liegt die Sägevorrichtung 4 auf der Hubvorrichtung auf, kann die Kupplung 332 gelöst und die Sägevorrichtung 4 entfernt werden. Die Bestückung der fliegenden Säge mit einer Sägevorrichtung 4 erfolgt analog in umgekehrter Reihenfolge,

Beidseitig des von der Wirbeltrennvorrichtung 4 aufgenommen Wirbelwerkzeugs 42 ist an jeweils zwei Querträgern 2 jeweils ein Spannmodul 5 zur Einspannung des abzulängenden Profil- oder Rohrmaterials angeordnet. Das Spannmodul 5 ist gebildet durch eine mit den Querträgern 2 verbundene Konsole 50, welche drei um jeweils 120° versetzt angeordnete Spannbacken 51 aufnimmt, die über Hydraulikzylinder 52 gegen ein einzuspannendes Rohr 7 pressbar sind. Weiterhin ist als Auflager des abzulängenden Stangen- oder Rohrmaterials eine - nicht dargestellte - Rollenführung angeordnet. Die - nicht dargestellte - Rollenführung umfasst im Wesentlichen zueinander angestellte Kegelrollen, auf denen das abzulängende Stangen- oder Rohrmaterial verschieblich gelagert ist. Die Spannmodule 5 sind über hydraulische Verriegelungen 53 lösbar mit zwei Querstreben 54 verbunden, die an den beiden den Wechselrahmen 3 aufnehmenden Querträgern 2 befestigt sind. Die Spannmodule 5 können durch hydraulische Entriegelung von den Querstreben 54 gelöst und separat entlang den Schienen 13 des Schienensystems 1 verfahren werden. Im Ausführungsbeispiel sind die Spannmodule 5 identisch ausgebildet und spiegelgleich zueinander beidseitig der Wirbeltrennvorrichtung angeordnet.

## Patentansprüche

1. Fliegende Säge, mit wenigstens einer Führungsschiene (13), auf dem eine Sägevorrichtung über wenigstens einen Fahrantrieb entlang auf vorgegebene Längen abzulängendem Profil- oder Rohrmaterial verfahrbar gelagert ist, insbesondere während des Ablängens synchron zur Vorschubbewegung des Profil- oder Rohrmaterials, **dadurch gekennzeichnet, dass** die Sägevorrichtung innerhalb eines als Wechselrahmen ausgebildeten Rahmenelements (3) angeordnet ist, das auf der wenigstens einen Führungsschiene verfahrbar gelagert ist, wobei die Sägevorrichtung mit dem Rahmenelement (3) lösbar verbunden ist, wobei die Sägevorrichtung (4) über eine Verschiebeeinrichtung mit dem Rahmenelement (3) verbunden ist, über welche die Sägevorrichtung (4) innerhalb des Rahmenelements (3) vertikal bewegbar ist, wobei die Verschiebeeinrichtung derart ausgebildet ist, dass ein Ausbringen der Sägevorrichtung (4) aus dem Rahmenelement 3 über die Verschiebeeinrichtung ermöglicht ist.

2. Fliegende Säge nach Anspruch 1, **dadurch gekennzeichnet, dass** wenigstens eine Führungsschiene (13) wie auch der wenigstens eine Fahrantrieb (24) oberhalb der Sägevorrichtung (4) angeordnet ist, wobei insbesondere kein Maschinenbett vorhanden ist.

3. Fliegende Säge nach Anspruch 2, **dadurch gekennzeichnet, dass** zwei Führungsschienen (13) angeordnet sind, die wenigstens einen auf diesen verfahrbaren Querträger (2) aufnehmen, wodurch ein Portal gebildet ist, an dem der die Sägevorrichtung (4) aufnehmende Rahmenelement (3) befestigt ist.

4. Fliegende Säge nach einem der vorgenannten Ansprüche, **dadurch gekennzeichnet, dass** die Sägevorrichtung (4) über wenigstens einen Antrieb (34, 351) innerhalb des Rahmenelements (3) bewegbar ist.

5. Fliegende Säge nach Anspruch 4, **dadurch gekennzeichnet, dass** die Verschiebeeinrichtung eine Spindel (33) umfasst, die mit einem Spindelantrieb (331) verbunden ist.

6. Fliegende Säge nach Anspruch 4 oder 5, **dadurch gekennzeichnet, dass** die Sägevorrichtung (4) über eine Kupplung (332) mit der Spindel (33) lösbar verbunden ist.

7. Fliegende Säge nach Anspruch 6, **dadurch gekennzeichnet, dass** die Kupplung elektrisch, pneumatisch oder hydraulisch ver- und entriegelbar ausgebildet ist.

8. Fliegende Säge nach einem der Ansprüche 3 bis 7, **dadurch gekennzeichnet, dass** das Rahmenelement (3) über einen Antrieb (34) horizontal entlang des wenigstens einen Querträgers (2) bewegbar ist.

9. Fliegende Säge nach einem der vorgenannten Ansprüche, **dadurch gekennzeichnet, dass** innerhalb des Rahmenelements (3) wenigstens eine vertikale Führung (321) vorhanden ist, über welche die Sägevorrichtung (4) mit dem Rahmenelement (3) verbunden ist.

10. Fliegende Säge nach Anspruch 9, **dadurch gekennzeichnet, dass** eine Hubvorrichtung vorgesehen ist, wobei an dem Rahmenelement (3) eine Positioniereinrichtung angeordnet ist, die eine Ankopplung der Hubvorrichtung in definierter Position zur Entnahme der Sägevorrichtung (4) aus dem Rahmenelement (3) ermöglicht.

11. Fliegende Säge nach Anspruch 10, **dadurch gekennzeichnet, dass** die Hubvorrichtung wenigstens eine vertikale Führung aufweist, die mit der vertikalen Führung (321) des Rahmenelements (33) korrespondiert und die in angekoppelter Positionierung der Hubvorrichtung eine Fortführung der vertikalen Führung (321) des Rahmenelements (33) bildet.

12. Fliegende Säge nach einem der vorgenannten Ansprüche, **dadurch gekennzeichnet, dass** die Sägevorrichtung (4) durch eine Wirbeltrennvorrichtung gebildet ist.

13. Fliegende Säge nach einem der vorgenannten Ansprüche, **dadurch gekennzeichnet, dass** wenigstens an einer Seite, bevorzugt beidseitig des Sägemoduls (2) jeweils ein Spannmodul zur Aufnahme eines abzulängenden Profil- oder Rohrmaterials angeordnet ist, dass mit dem Querträger (2) verbunden und an die Sägevorrichtung (4) anstellbar ist.

14. Fliegende Säge nach Anspruch 13, **dadurch gekennzeichnet, dass** wenigstens ein Spannmodul mit wenigstens einem separaten Querträger (2) verbunden ist, über den es auf der wenigstens einen Führungsschiene (13) verfahrbar ist.

## Claims

1. Flying saw with at least one guide rail (13) on which a sawing device is mounted via at least one traversing device to move along profiled or tubular material to be cut to specified lengths, in particular, synchronously with the forward-feed movement of the profiled or tubular material during the cutting process, **characterised in that** the sawing device is arranged within a frame element (3) designed as a changing frame which is mounted to move along the guide rail or guide rails, where the sawing device (4) is joined detachably to the frame element (3), where the sawing device (4) is joined to the frame element (3) via a shifting device, by means of which the sawing device (4) can be moved vertically within the frame element (3), where the shifting device is formed in such a way that it is possible to take the sawing device (4) out of the frame element (3) via the shifting device.

2. Flying saw according to claim 1, **characterised in that** at least one guide rail (13) as well as the traversing device or traversing devices (24) is (are) arranged above the sawing device (4), in particular where no machine bed exists.

3. Flying saw according to claim 2, **characterised in that** two guide rails (13) are arranged which support at least one of the transverse bars (2) moving on these, thereby forming a portal on which the frame element (3) holding the sawing device (4) is fixed.

4. Flying saw according to any of the above claims, **characterised in that** the sawing device (4) can be moved within the frame element (3) by at least one drive unit (34, 351).

5. Flying saw according to claim 4, **characterised in that** the shifting device includes a spindle (33) which is connected to a spindle drive unit (331).

6. Flying saw according to either claim 4 or claim 5, **characterised in that** the sawing device (4) is connected detachably to the spindle (33) by means of a coupling (332).

7. Flying saw according to claim 6, **characterised in that** the coupling is designed to engage and disengage electrically, pneumatically or hydraulically.

8. Flying saw according to any of the claims 3 - 7, **characterised in that** the frame element (3) can be moved by a drive unit (34) horizontally along the transverse bar or transverse bars (2).

9. Flying saw according to any of the above claims, **characterised in that** within the frame element (3) there is at least one vertical guide (321) by means of which the sawing device (4) is joined to the frame element (3).

10. Flying saw according to claim 9, **characterised in that** a lifting device is provided for which a positioning device is arranged on the frame element (3) which allows the lifting device to be coupled into a defined position in order to remove the sawing device (4) from the frame element (3).

11. Flying saw according to claim 10, **characterised in that** the lifting device has at least one vertical guide which corresponds to the vertical guide (321) of the frame element (33) and which forms a continuation of the vertical guide (321) of the frame element (33) when the lifting device is coupled into position.

12. Flying saw according to any of the above claims, **characterised in that** the sawing device (4) is formed by a whirling cutting device.

13. Flying saw according to any of the above claims, **characterised in that** a clamping module for holding the profiled or tubular material to be cut is arranged on at least one side, preferably on both sides of the sawing module (2), which is joined to the transverse bar (2) and which can be adjusted against the sawing device (4).

14. Flying saw according to claim 13, **characterised in that** at least one clamping module is connected to at least one separate transverse bar (2), by means of which it can be moved on the guide rail or guide rails (13).

## Revendications

1. Scie mobile comprenant au moins un rail de guidage (13) sur lequel est placé un dispositif de sciage en appui déplaçable via au moins un entraînement de déplacement le long d'un matériau profilé ou tubulaire à tronçonner en longueurs définies, en particulier pendant le tronçonnage en synchronisme avec le mouvement d'avance du matériau profilé ou tubulaire, **caractérisée en ce que** le dispositif de sciage est agencé à l'intérieur d'un élément cadre (3) configuré en cadre interchangeable, élément qui se trouve en appui déplaçable sur au moins un rail de guidage, sachant que le dispositif de sciage est relié de manière détachable avec l'élément cadre (3), sachant que le dispositif de sciage (4) est relié à l'élément cadre (3) via un équipement de décalage via lequel le dispositif de sciage (4) est déplaçable verticalement à l'intérieur de l'élément cadre (3), sachant que l'équipement de décalage est configuré de sorte à rendre possible l'extraction du dispositif de sciage (4) hors de l'élément cadre (3) via l'équipement de décalage.

2. Scie mobile selon la revendication 1, **caractérisée en ce qu'**au moins un rail de guidage (13) ainsi qu'au moins un entraînement de déplacement (24) sont agencés au dessus du dispositif de sciage (4), sachant qu'il n'y a pas, en particulier, de bâti machine.

3. Scie mobile selon la revendication 2, **caractérisée en ce que** sont agencés deux rails de guidage (13) qui reçoivent au moins une poutre transversale (2) déplaçable sur ces rails, ce qui forme un portique contre lequel est fixé l'élément cadre (3) recevant le dispositif de sciage (4).

4. Scie mobile selon l'une des revendications précédentes, **caractérisée en ce que** le dispositif de sciage (4) est déplaçable via au moins un entraînement (34, 351) à l'intérieur de l'élément cadre (3).

5. Scie mobile selon la revendication 4, **caractérisée en ce que** l'équipement de décalage comprend une broche (33) reliée à un entraînement (331) de broche.

6. Scie mobile selon la revendication 4 ou 5, **caractérisée en ce que** le dispositif de sciage (4) est relié de manière détachable à la broche (33) via un accouplement (332).

7. Scie mobile selon la revendication 6, **caractérisée en ce que** l'accouplement est configuré verrouillable et déverrouillable électriquement, pneumatiquement ou hydrauliquement.

8. Scie mobile selon l'une des revendications 3 à 7, **caractérisée en ce que** l'élément cadre (3) est déplaçable via un entraînement (34) horizontalement le long d'au moins une poutre transversale (2).

9. Scie mobile selon l'une des revendications précédentes, **caractérisée en ce qu'**à l'intérieur de l'élément cadre (3) se trouve au moins un guidage vertical (321) via lequel le dispositif de sciage (4) est relié à l'élément cadre (3).

10. Scie mobile selon la revendication 9, **caractérisée en ce qu'**est prévu un dispositif de levage, sachant que contre l'élément cadre (3) est agencé un équipement de positionnement permettant de coupler le dispositif de levage dans une position définie pour sortir le dispositif de sciage (4) de l'élément cadre (3).

11. Scie mobile selon la revendication 10, **caractérisée en ce que** le dispositif de levage comporte au moins un guidage vertical qui épouse le guidage vertical (321) de l'élément cadre (33) et qui, lorsque le dispositif de levage se trouve en position accouplée, forme un prolongement du guidage vertical (321) équipant l'élément cadre (33).

12. Scie mobile selon l'une des revendications précédentes, **caractérisée en ce que** le dispositif de sciage (4) est formé par un dispositif de coupe à mouvement satellite.

13. Scie mobile selon l'une des revendications précédentes, **caractérisée en ce qu'**au moins sur un côté, de préférence des deux côtés du module de scie (2), se trouve un module de serrage servant à recevoir un matériau profilé ou tubulaire à tronçonner, qui est relié à la poutre transversale (2) et qu'il est possible de serrer contre le dispositif de sciage (4).

14. Scie mobile selon la revendication 13, **caractérisée en ce qu'**au moins un module de serrage est relié à au moins une poutre transversale (2) séparée via laquelle il est possible de déplacer ledit module sur au moins un rail de guidage (13).
